# EUROPEAN PATENT SPECIFICATION

(11) **EP 0 729 998 B1**
(45) Date of publication and mention of the grant of the patent: **17.07.2002**
(21) Application number: 95913416.4
(22) Date of filing: 04.04.1995
(51) Int. Cl.: C08J 5/18, C08L 53/02

(54) **STYRENIC RESIN SHEET AND MOLDING**
STYROLHARZFOLIE UND DEREN HERSTELLUNG
FEUILLE EN RESINE DE STYRENE ET MOULAGE DE CETTE FEUILLE

(30) Priority: 19.08.1994 JP 21677894
(43) Date of publication of application: 04.09.1996
(73) Proprietor: Asahi Kasei Kabushiki Kaisha, Osaka-shi, Osaka 530-8205 (JP)
(72) Inventor: SHO, Kazuhiko, Fujisawa-shi Kanagawa 252 (JP); TOYAMA, Mitsutoshi, Yokohama-shi Kanagawa 233 (JP)
(74) Representative: Strehl Schübel-Hopf & Partner
(86) International application number: JP9500646
(87) International publication number: WO9606127

(56) References cited:
- JP-A- 6 009 825
- JP-A- 6 057 067
- JP-A- 6 145 443

## Description

### TECHNICAL FIELD

The present invention relates to styrene type resin sheets which comprise a styrene type resin composition containing specific amounts of a terpene type resin and a rubber-modified styrene resin containing a continuous phase of a styrene type polymer having specific components and dispersed particles of a styrene-butadiene diblock copolymer and which is formed so as to have a heat shrinkage percentage of a certain degree or less. The present invention also relates to molded articles obtained therefrom. The sheets of the present invention have good strength, stiffness and transparency and avoid the development of haze when secondarily processed by heating. They are suitable for use in packing and containers for foodstuffs and electric appliances and other goods.

### BACKGROUND ART

Vinyl chloride resin is widely used for transparent packing materials for electric appliances, electric parts, office supplies, and foodstuffs and the like. Although vinyl chloride resin exhibits a good balance of properties such as transparency, strength, moldability, resistance to flaws, and resistance to chemicals and is relatively inexpensive, vinyl chloride resin has a pollution problem when it is discarded or burned because of the large amount of chloride contained in the resin. For this reason, there is a strong demand for substitutes for vinyl chloride resin.

As one of the substitutes for vinyl chloride resin, the possibility of an A-PET resin has been considered. However, this resin has the disadvantages of poor moldability, difficulty in recycling, and high cost. In addition, extruders and molding machines used for vinyl chloride resins cannot be applied with A-PET resin with the result that the A-PET resin has not used on the market yet.

The other substitute is a blend of polystyrene and a styrene-butadiene block polymer. This blend has a poor balance of transparency and strength, and also has drawbacks such as a tendency for flaws, bad odor, poor resistance to climate and poor appearance so that it is only employed for limited uses.

Japanese Patent Application Laid-Open Nos. 149211/1992 and 198244/1992 disclose a blend of a styrene-butyl acrylate copolymer and a styrene-butadiene block copolymer which has an improved balance of transparency and strength. However, this blend has the above-mentioned drawbacks due to the styrene-butadiene block copolymer.

U.S. Patent No. 4,680,337 teaches a process for polymerizing a mixture of styrene, butyl acrylate, methyl methacrylate and a styrene-butadiene block copolymer. Although the thermoplastic resin polymerized by the disclosed process is transparent and shows a high degree of elongation, it does not exhibit the reinforcing effect of rubber at all as shown in the results of the Izod impact test.

Before the above U.S. Patent was issued, there have been many reports concerning transparent rubbery-modified styrene type resins comprising dispersed particles of rubber elastomer and a continuous phase of a copolymer containing styrene and acrylic/methacrylic ester. The products prepared by using such resins also have been commercially available. However, a transparent molded article can be obtained only when such resins are injection molded to press them to a mold under high pressure. When the resins are molded by other methods, i.e., sheet forming, forming into the shape of a container and other goods, extrusion molding by using a profile die, or injection molding under lower pressure, the transparency of the product is reduced. This phenomenon is called herein "haze development". Due to this phenomenon, a product with clear transparency cannot be obtained. Thus, since the phenomenon of "haze development" has not been eliminated, such resins have not been placed on the market as a substitute for vinyl chloride resin.

Japanese Patent Application Laid-Open No. 171001/1993 discloses a process for improving the balance of transparency and strength by using terpene type hydrogenated resins. The intended purpose is not to eliminate the "haze development" phenomenon when the resins are secondarily processed by heating. Accordingly, no solution to the problem is disclosed.

Japanese Patent Application Laid-Open No. 145443/1994 teaches a transparent sheet comprising a composition containing rubber-modified styrene type resin which contains rubber elastomer as dispersed particles, terpene type resins and a block copolymer. It discloses that a combination of the block copolymer and the terpene type resin improves the balance of transparency and strength and avoids "haze development". However, such resin compositions containing the block copolymer also have the drawbacks disclosed above.

The present inventors made an effort intensively and extensively in order to solve the problems of the conventional sheets comprising a rubber-modified styrene type resin and molded articles obtained from them. As a result, by using rubber-modified styrene type resin compositions having specific components including a terpene type resin and by controlling the heat shrinkage percentage to a certain value or less, sheets having good strength, stiffness and transparency, and which avoid "haze development" when secondarily processed by heating, and molded articles obtained from them can be provided.

### DISCLOSURE OF THE INVENTION

The present invention relates to a styrene type resin sheet which comprises a styrene type resin composition containing from 3 to 15 parts by weight of a terpene type resin and 100 parts by weight of a rubber-modified styrene type resin containing (i) from 85 to 92 % by weight of a continuous phase of a copolymer comprising from 45 to 60 % by weight of a styrene type monomer unit, from 5 to 15 % by weight of a C₂ to C₄-alkyl acrylic ester monomer unit and/or a C₂ to C₄-alkyl methacrylic ester monomer unit, and from 25 to 50 % by weight of a methyl methacrylate monomer unit and (ii) from 8 to 15 % by weight of dispersed particles of a rubber elastomer having an average diameter of from 0.4 to 0.9 µm and comprising a styrene-butadiene diblock copolymer having from 25 to 40 % by weight of styrene, which has a thickness of from 0.10 to 2.5 mm, and which has a heat shrinkage percentage of 20 % or less. The invention also relates to molded articles obtained therefrom.

The amount of a C₂ to C₄-alkyl acrylic ester monomer unit and/or a C₂ to C₄-alkyl methacrylic ester monomer unit used in the present invention is from 5 to 15 % by weight, preferably 6 to 13 % by weight. When the amount is under 5 % by weight, resins with clear transparency cannot be obtained even if the refractive index of the rubber elastomer and that of the continuous phase are equalized or the diameter of the rubber elastomer is reduced. When the amount is under 5 % by weight, the heat resistance of the resin is increased. As a result, the heating temperature of the sheet is raised so that its moldability is worse than that of vinyl chloride resin. When the amount is over 15 % by weight, the heat resistance of the resin is decreased so that the heat resistance of the molded articles is decreased, thereby limiting its practical use.

Amounts of a styrene type monomer unit and a methyl methacrylate monomer unit are from 45 to 60 % by weight and from 25 to 50 % by weight, respectively, and preferably from 45 to 55 % by weight and from 30 to 45 % by weight, respectively. From the standpoint of the desired heat resistance of the rubber-modified styrene type resin mentioned above, after determining the amount of a C₂ to C₄-alkyl acrylic ester monomer unit and/or a C₂ to C₄-alkyl methacrylic ester monomer unit from 5 to 15 % by weight, the amounts of the styrene type monomer unit and methyl methacrylate monomer unit are selected so as to equalize its refractive index with that of the rubber elastomer.

The ratio of components of a continuous phase is based on the total weight of a styrene type monomer unit, a C₂ to C₄-alkyl acrylic ester and/or methacrylic ester monomer unit and a methyl methacrylate monomer unit. When each ratio is within the range of the present invention and the transparency of the resins does not decrease, other components may be included.

The styrene type monomer of the present invention includes styrene, α-methylstyrene, p-methylstyrene, p-t-butylstyrene and the like. Of these, from the standpoint of the productivity and the cost, styrene is preferred.

A C₂ to C₄-alkyl acrylic ester monomer and/or a C₂ to C₄-alkyl methacrylic ester monomer includes commercially available ethyl acrylate, butyl acrylate, ethyl methacrylate and butyl methacrylate and the like. These may be used alone or in combination. Of these, from the standpoint of productivity and the cost, butyl acrylate and butyl methacrylate are preferred.

The continuous phase of styrene copolymer of the present invention accounts for from 85 to 92 % by weight based on the amount of rubber-modified styrene type resin. When it is less than 85 % by weight, the stiffness decreases. When it is more than 92 % by weight, the strength increases.

In the present invention, the difference in the refractive index between the continuous phase and the rubber elastomer is preferably 0.01 or less, more preferably 0.008 or less. When this difference is over 0.01, it is difficult to obtain resins, sheets and molded articles with clear transparency.

The polymerization degree of the continuous phase is preferably from 0.8 to 0.4 dl/g expressed by reduced viscosity (30° C). When it is more than 0.8, the flowability of the styrene type resins is reduced. As a result, the resins are too oriented when formed into sheets so that both the transparency of the sheet and molded articles is decreased. In order to avoid orientation of the resin, the productivity of sheet molding must be extremely reduced. When it is less than 0.4, the strength of the sheets is greatly lowered even though the diameter of dispersed particles of rubber elastomer is set at the hightest value within the range of the present invention.

A styrene-butadiene diblock copolymer is used as the rubber elastomer of the present invention. It may not be a complete diblock copolymer. A complete styrene-butadiene random copolymer is not preferable since the diameter of the copolymer easily becomes large and the size of the copolymer contained in the particles becomes large so that the transparency decreases. A connection between a styrene polymer block and a butadiene polymer block may be a styrene-butadiene random copolymer. By using a rubber elastomer of a styrene-butadiene-styrene triblock copolymer and a copolymer having a multi-structure which is more than a triblock, resins having sufficient strength cannot be obtained because the diameter of the rubber elastomer becomes too small as shown in Comparative Example 22.

The styrene content of the rubber elastomer is from 25 to 40 % by weight. When it is more than 40 % by weight, the reinforcing effect of the rubber elastomer markedly decreases. When it is less than 25 % by weight, the amount of methyl methacrylate is increased in order to match the refractive index between the rubber elastomer and the continuous phase with the result that the transparency is decreased. When it is from 25 to 40 % by weight, it is easy to control the average diameter of particles so that sheets having a good balance of transparency and strength can be obtained.

The molecular weight of rubber elastomer is preferably from 15 to 50 cps (54 - 180 kg /(k·m)) expressed as a viscosity of 50 % by weight of styrene solution at 25° C. When it is more than 50 cps, it is difficult to reduce the diameter of the rubber elastomer. In particular, it is difficult to avoid preparing particles having a diameter of 1.0 µm or more.

The average diameter of rubber elastomer of the present invention is measured by a laser scattering method. This diameter is from 0.4 to 0.9 µm, preferably from 0.5 to 0.8 µm. When it is more than 0.9 µm, the transparency of the sheets is decreased, in particular, "haze development" is noticeably observed when sheets are secondarily processed by heating into the shape of a container and the like. A diameter of less than 0.4 µm is not preferable since the strength is largely decreased. The distribution of diameter of the rubber elastomer is not particularly limited.

The amount of terpene type resins is from 3 to 15 parts by weight, preferably from 3 to 12 parts by weight based on 100 parts by weight of rubber-modified styrene type resins. When it is less than 3 parts by weight, the sheets show a high degree of "haze development" when secondarily processed by heating into the shape of a container and the like. When it is more than 15 parts by weight, the effect of avoiding "haze development" is saturated. This results in a rise in cost and reduction of the stiffness. The content of terpene type resins is preferably from 0.25 to 1.0 times as much as that of the rubber elastomer. As the content of the rubber elastomer increases, it is preferred that the content ratio of the terpene type resins to the rubber elastomer be around 1.0 in order to avoid "haze development".

The molecular weight of terpene type resins is preferably from 400 to 3,000 expressed by a weight-average molecular weight when measured by gel permeation chromatography. More preferably, it is from 500 to 2,000. When it is less than 400, the "haze development" phenomenon is not avoided. When it is more than 3,000, the effect of avoiding "haze development" is markedly decreased.

The terpene type resins of the present invention include partially hydrogenated terpene type resins. These may be used alone or in combination.

The terpene type resins are prepared by cationic polymerization of an aromatic vinyl hydrocarbon and a terpene by using a Friedel-Crafts catalyst of aluminum chloride and boron trifluoride. A suitable aromatic vinyl hydrocarbon includes styrene and the like, and a suitable terpene includes d-limonen obtained from the rind of citrus fruits and diterpenes obtained by isomerization of α-pinene obtained from turpentine. Commercially available terpene type resins such as YS resins TO-125, TO-115, TO-105 and TO-85 (manufactured by Yasuhara Chemical Co., Ltd.) can be used as a terpene type resin in the present invention. A partially hydrogenated terpene type resin is obtained by hydrogenating a terpene resin. The degree of hydrogeneration is not particularly limited, but 10 mol % or more of an aromatic ring should remain. When the amount of aromatic ring decreases, the compatibility with a rubber-modified styrene type resin decreases. As a result, such a terpene type resin causes a decrease of the transparency. Commercially available partially hydrogenated terpene type resins such as CLEARON M-115 and M-105 (manufactured by Yasuhara Chemical Co., Ltd.) can be used as a partially hydrogenated terpene resin.

The rubber-modified styrene type resins of the present invention can be prepared by a process which is widely used for preparing high impact polystyrene (HIPS resin). According to the process, rubber elastomer is dissolved in a feed mixture containing a styrene type monomer and/or methyl methacrylate and/or a polymerization solvent and/or a polymerization initiator, and the obtained feed mixture containing dissolved rubber elastomer is fed into a reactor equipped with an agitator to be polymerized. The diameter of dispersed particles of the rubber elastomer can be controlled by methods which are usually used such as by changing the velocity of the agitator, or by changing the viscosity of the reaction mixture. These processes may be used in combination. A high transparency is maintained by general methods such as a method wherein a monomer is added in the course of polymerization as required, and a method wherein a monomer is continuously added in the course of polymerization.

The desired amount of the rubber elastomer is obtained by controlling the amount of raw material or rate of polymerization. After the rubber-modified styrene type resins containing a high concentration of the rubber elastomer are produced, they may be mixed with a styrene type resin without rubber elastomer prepared in advance to obtain the desired amount of rubber elastomer.

When the feed mixture is polymerized, ethylbenzene, toluene, xylene and the like may be used as a polymerization solvent. Organic peroxides commonly used in the polymerization of a styrene type polymer can be used or added in the course of the polymerization. In order to control the polymerization degree, an α-methyl styrene dimer and a mercaptan and the like commonly used in the polymerization of a styrene type polymer may be used. Polymerization may be carried out by a bulk polymerization or a solution polymerization. A batch method and a continuous method can be used for polymerization.

The polymer solution is transferred to a recovery apparatus from a reactor. A flash tank system, an extruder with multi-vents and other systems commonly used in the preparation of a styrene type polymer are employed as a recovery apparatus. The operating conditions may be set almost the same as those of a styrene type resin. Taking into consideration use for the packaging of foodstuffs, the amount of unreacted monomers and polymerization solution and other ingredients should be preferably reduced as much as possible. The amount of the unreacted monomers is preferably 1,000 ppm or less, more preferably 500 ppm or less, expressed as a total amount of residual styrene, acrylic ester/methacrylic ester and methyl methacrylate. It is preferred that the amount of a dimer, a trimer or the like be minimized in order to avoid mold deposits as much as possible when sheets are produced and secondarily processed by heating. For this reason, the unreacted monomers and the like are preferably eliminated by a known method comprising adding water, nitrogen gas and carbon dioxide gas during the recovery process. Molten resins, from which unreacted monomers and the like have been eliminated, are pelletized.

Terpene type resins are fed during the processes of preparation according to the following manner. These processes include (a) a process comprising the steps of dissolving the terpene type resins in a feed mixture where rubber elastomer is dissolved, or in a styrene monomer, an acrylic ester monomer and/or a methacrylic ester monomer, a methyl methacrylate monomer, or a solvent, and feeding them during polymerization or just before the recovery process; (b) a process comprising the steps of melting the terpene type resins with heating and feeding them in a pelletizing process; and (c) a process comprising the steps of blending the terpene type resins with rubber elastomer, melting them and feeding them in a sheet-forming process.

The thickness of sheets is from 0.10 to 2.5 mm, preferably from 0.15 to 2.0 mm. When a sheet having a thickness of less than 0.1 mm is produced, it is difficult to control uniform thickness by using a T-die. When a sheet having a thickness of less than 0.1 mm is prepared by an inflation method, the sheet obtained is too oriented to lessen transparency and thus shows a high degree of "haze development". As a result, neither a sheet having good transparency nor a molded article having good transparency is obtained. When the thickness is more than 2.5 mm, the period necessary for processing by heating becomes longer, thereby causing "haze development". Moreover, such a sheet turns white when it is wound up as a roll.

The heat shrinkage percentage of a sheet must be 20 % or less. In the present invention, heat shrinkage percentage means the shrinkage percentage in the direction of extrusion of a sheet. When the heat shrinkage percentage is more than 20 %, relaxation of orientation occurs when sheets are secondarily processed by heating, making the surface of the sheets rough. As a result, the degree of "haze development" markedly rises so that molded articles with clear transparency are not obtained. In addition, due to strong orientation of the sheets, both the strength of the sheets and the molded articles are reduced.

Sheets are prepared by melting in an extruder and extruding from a T-die as is commonly done in the art. In the preparation processes, in order to attain a heat shrinkage percentage of 20 % or less, sheets must be prepared taking into account the following points.

The temperature of an extruder used for sheets is preferably high. Sheets with good transparency are obtained when resin compositions are extruded at a temperature of from 200° to 250° C, more preferably from 210° to 250° C. When extrusion is carried out at a low temperature, sheets obtained from a T-die have suffered from high tension, and the heat shrinkage percentage of the sheets is increased.

The ratio of clearance of a T-die lip to the thickness of the sheets is more desirable when it is closer to 1. It is preferably from 1.0 to 2.5, more preferably from 1.0 to 2.0. When this ratio becomes large, the tension of the sheets increases so that the heat shrinkage percentage rises.

Preferably, an air gap is set as long as possible. The heat shrinkage percentage can be reduced through the air gap by relaxing the tension provided to the sheets in a T-die.

The temperatures of a cooling roll, a touch roll, and a polishing roll are from 50° to 80° C, more preferably from 50° to 70° C. When they are less than 50° C, the tension provided to sheets between a T-die and a roll and between rolls is fixed so that the tension cannot be relaxed during the process before the sheets are rolled up. The linear pressure between rolls is preferably low since this avoids providing tension to the sheets. A desirable linear pressure is from 5 to 20 kg/cm. In order to improve the gloss of HIPS resin sheets and ABS resin sheets, a high linear pressure is used so as to transfer the mirror surface of a roll such as a touch roll, a cooling roll and a polishing roll. When the sheets of the present invention are treated according to the above method, occasionally a sheet with high transparency is obtained, but it has a high heat shrinkage percentage. As a result, when the sheet is secondarily processed by heating, a "haze development" phenomenon is caused so that the resulting molded article shows markedly poor transparency.

The take-off speed of the sheets is preferably low. Since delivery, i.e., productivity decreases, the take-off speed should not be markedly lowered. It is important to maintain a balance of transparency and productivity.

It is preferred that the tension of sheets taken-off be minimized to a degree wherein the sheets can be wound up with a winding roll.

Taking into consideration the above factors concerning the extrusion of the sheets, conditions of preparing sheets having a good balance of productivity and quality should be selected, and the heat shrinkage percentage should be controlled to less than 20 %. According to this procedure, sheets having good transparency and which avoid "haze development" when secondarily processed by heating and molded articles with good transparency are obtained.

As used herein, a sheet having transparency means a sheet having a haze of 6 or less, preferably 5 or less, more preferably 3 or less.

The sheets of the present invention are secondarily processed by heating according to a known method such as vacuum forming and pressure forming to obtain molded articles such as a container and a blister pack. The conditions of forming are not limited. The sheet temperature is preferably lowered to the range where sheets can be processed to obtain molded articles having good transparency. In order to produce such molded articles, heating at a high temperature for a short time is more preferable than heating at a low temperature for a long time as a heating process for the sheets. According to the first heating process, sheets oriented when secondarily processed by heating are not drastically relaxed so that the surfaces of the molded articles are not so rough.

Additives, commonly used for styrene type resins, such as an antioxidant, a lubricant, a plasticizer, an antistatic agent, and a coloring agent can be used for the rubber-modified styrene type resin of the present invention.

An antistatic agent widely used in order to improve surface characteristics of sheets and a lubricant such as silicone may be applied on the surface of the styrene type resin sheet of the present invention.

### BRIEF DESCRIPTION OF THE DRAWINGS

Fig. 1 shows a schematic representation of a reaction apparatus used for polymerizing styrene type resins of the present invention.

Fig. 2 shows a perspective view of a cup as a molded article.

Figs. 3 and 4 show graphs indicating the relationship between the diameter of dispersed particles of rubber elastomer and the degree of "haze development" and Du Pont type dart impact strength, respectively.

Figs. 5 to 8 show graphs indicating the relationship between the degree of "haze development" and the amount of terpene type resins, heat shrinkage percentage, and the content ratio of partially hydrogenated terpene type resin/rubber elastomer, respectively.

Symbols used in the Figures are as follows:
- 1:: reactor 1
- 2:: reactor 2
- 3:: reactor 3
- 4:: preheater

### BEST MODE FOR CARRYING OUT THE INVENTION

The present invention is now described in more detail by referring to Examples. Each characteristic of the samples in the Examples and Comparative Examples is determined as follows:

### 1. The diameter of dispersed particles of rubber elastomer

The diameter of dispersed particles of rubber elastomer is measured by using a laser scattering "COULTER R LS130" manufactured by COULTER ELECTRONICS, INC.

### 2. Content of rubber elastomer

Content of rubber elastomer is measured by using infrared spectrophotometry commonly employed for high impact polystyrene (HIPS).

### 3. Identification and determination of components of a continuous phase

A styrene type monomer (A), a C₂ to C₄-alkyl acrylic (methacrylic) ester type monomer (B), and a methyl methacrylate monomer (C) which form a continuous phase are measured by the following methods.

A rubber-modified styrene type resin is dissolved in toluene, and the obtained solution is subjected to a centrifuge at 20,000 rpm for 30 min. to separate supernatant. A large amount of methanol is added to the supernatant to be precipitated as a polymer. The polymer obtained is at 50° C under 10 mmHg to be subjected to JNM-G400 FT-NMR (manufactured by Japan Analytical Industry Co., Ltd.). Conditions of measurement are as follows:

| | |
|---|---|
| Pals width | 8.4 µs |
| Data point | 16384 |
| Repeated time | 7.559 sec. |
| AD converter | 16 bit |
| Integrating number of time | 1,000 |
| Sample concentration | 10 wt. % |
| Solvent | 1,1,2,2-tetrachloroethane-(d2) |
| Sample tube | 5 mm |
| Measuring temperature | 120° C |

A peak assigned to a hydrogen of a phenyl group of (A) is observed at 6.2 to 7.4 ppm, a peak assigned to hydrogen of (B) is observed at 3.4 to 3.8 ppm, and peaks assigned to hydrogen of a methyl group of (B) and (C) are observed at 0.2 to 1.1 ppm. After the above peaks are separated, each weight percent of (A), (B) and (C) is calculated by using a peak area ratio.

### 4. Reduced viscosity of a continuous phase of rubber-modified styrene type resins

A 0.5 % by weight toluene solution of a sample used in above 3 is prepared. Using an Ostwald Cannon Fenske viscosity tube #100, reduced viscosity of the resulting toluene solution is measured in a thermostatic chamber at 30° C.

### 5. Styrene content of rubber elastomer

Styrene content of rubber elastomer is measured by infrared spectrophotometry commonly used for analysis of rubber components.

### 6. Solution viscosity of rubber elastomer

A 5 % by weight styrene solution of rubber elastomer is prepared. Using an Ostwald Cannon Fenske viscosity tube #350, solution viscosity is measured in a thermostatic chamber at 25° C.

### 7. Average molecular weight of terpene type resins

Average molecular weight of terpene type resins is measured by gel permeation chromatography HLC-8020 (manufactured by TOSOH Corporation), and expressed as weight-average molecular weight of polystyrene.

### 8. Terpene type resin content of styrene type resins

0.5 g of styrene type resins is dissolved in 25 ml of THF and the resulting THF solution is subjected to a centrifuge to separate THF-soluble and insoluble matters. The THF-insoluble matter is dispersed in 20 ml of THF. The resulting THF solution is separated by centrifuging to THF-soluble and insoluble matters. The THF-soluble matter is collected, evaporated to dryness, added to 20 ml of THF, and shaken for 1 hour. The resulting solution is subjected to gel permeation chromatography. Four columns of Shodex KF804 (manufactured by SHOWA DENKO K.K.) are used.

### 9. Heat shrinkage percentage

Heat shrinkage percentage in the direction of extruding is measured according to JIS K6872.

### 10. Refraction index

Refraction indices of a continuous phase and rubber elastomer of rubber-modified styrene type resin are measured by an Abbe refractometer at 25° C.

### 11. Melt flow rate

Melt flow rate of resin compositions is measured according to ISO R113.

### 12. Vicat softening point

Vicat softening point of resin compositions is measured according to ASTM D1525.

### 13. Luminous transmittance of all light beams and haze

Luminous transmittance of all light beams and haze is measured according to ASTM D1003.

### 14. Du Pont type dart impact strength

Du Pont type dart impact strength of sheets is measured according to JIS K5400.

### 15. Tensional modulus

Tensional modulus of sheets is measured according to JIS K6872.

### 16. Degree of "haze development"

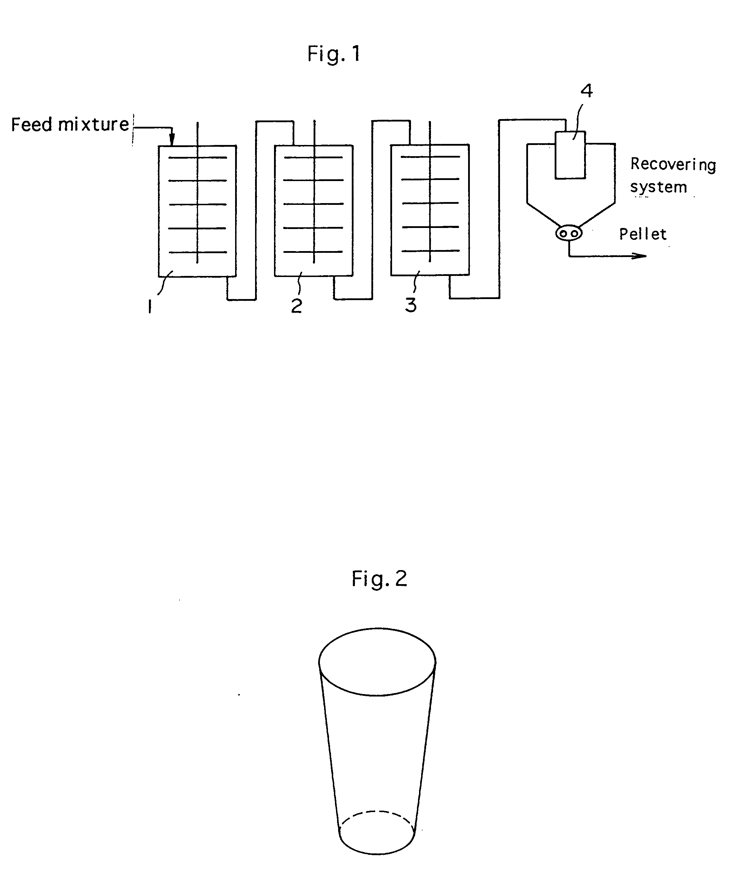

A cup is formed as shown in Fig. 2. Degree of "haze development" is evaluated with the naked eye according to the degree of whiteness of a sidewall of the cup compared to that of the sheet before being formed. The degree roughly corresponds to a haze ratio of a sidewall of a cup to a sheet as shown below, although it does not exactly correspond.

| (evaluation) | | (haze ratio) |
|---|---|---|
| A | no "haze development" | ··· 1-1.2 |
| B | a very little "haze development" | ··· 1.5-2 |
| C | noticeable "haze development" | ··· 3-5 |
| D | quite noticeable "haze development" | ··· 8 or more |

### 17. Transparency of molded articles

The practicability of a molded cup is evaluated according to its transparency. When the cup has enough transparency to substitute for rigid PVC molded articles which are widely used for lids of containers for salad and like foods, it is practical.

### <Preparation of rubber-modified styrene type resins>

polymerization of rubber-modified styrene type resins is carried out by using an apparatus shown in Fig. 1. polymerization reactors 1, 2 and 3 are 6.2-liter pipe type reactors equipped with an agitator. Raw material solution is fed to the polymerization reactor 1 to polymerize. The polymer solution is successively transferred to the reactors 2 and 3, and the polymer solution recovered from the reactor 3 is transferred to a recovery system equipped with a preheater, which has a 0.8-liter static mixer. After the polymer solution is heated at 240° C with a preheater, unreacted monomers and polymerization solvent and the like are removed under a vacuum of 10 mmHg in a recovery system. Then, the polymer is pelletized to obtain rubber-modified styrene type resins.

### <Rubber-modified styrene type resins - 1 to 7>

40.5 parts by weight of styrene, 9.5 parts by weight of butyl acrylate, 29.2 parts by weight of methyl methacrylate, 12 parts by weight of ethylbenzene, and 8.8 parts by weight of a styrene-butadiene diblock copolymer containing 30 % by weight of styrene (ASAPREN 680A; manufactured by Asahi Chemical Industry Co., Ltd.) are fed to a tank to dissolve. After the rubber elastomer is dissolved, 0.03 part by weight of organic peroxide PERHEXA C (manufactured by NOF Corporation) is fed to the tank, then the feed mixture is supplied to a reactor 1 at a feed rate of 2 ℓ/hr. The polymerization temperatures of reactors 1 to 3 are 120° C, 140° C and 150° C, respectively. The diameter of dispersed particles is controlled by adjusting the rotational speed of the agitators of the reactors 1 and 2. The properties of the rubber-modified styrene type resins are shown in Table 1-1.

### <Rubber-modified styrene type resins - 8 to 10>

40.0 parts by weight of styrene, 7.1 parts by weight of butyl acrylate, 32.1 parts by weight of methyl methacrylate, 12 parts by weight of ethylbenzene, and 8.8 parts by weight of a styrene-butadiene diblock copolymer containing 30 % by weight of styrene (ASAPREN 680A; manufactured by Asahi Chemical Industry Co., Ltd.) are fed to a tank to dissolve. After the rubber elastomer is dissolved, 0.03 part by weight of organic peroxide PERHEXA C (manufactured by NOF Corporation) is fed to the tank, then the feed mixture is supplied to a reactor 1 at a feed rate of 2 ℓ/hr. The polymerization temperatures of reactors 1 to 3 are 118° C, 138° C and 152° C, respectively. The diameter of the dispersed particles is controlled by adjusting the rotational speed of the agitators of the reactors 1 and 2. The properties of the rubber-modified styrene type resins are shown in Table 1-1.

### <Rubber-modified styrene type resin - 11>

39.6 parts by weight of styrene, 3.2 parts by weight of butyl acrylate, 36.4 parts by weight of methyl methacrylate, 12 parts by weight of ethylbenzene, and 8.8 parts by weight of a styrene-butadiene diblock copolymer containing 30 % by weight of styrene (ASAPREN 680A; manufactured by Asahi Chemical Industry Co., Ltd.) are fed to a tank to dissolve. After the rubber elastomer is dissolved, 0.03 part by weight of organic peroxide PERHEXA C (manufactured by NOF Corporation) is fed to the tank, then the feed mixture is supplied to a reactor 1 at a feed rate of 2 ℓ/hr. The polymerization temperatures of reactors 1 to 3 are 123° C, 143° c and 158° C, respectively. The diameter of dispersed particles is controlled by adjusting the rotational speed of the agitators of the reactors 1 and 2. The properties of the rubber-modified styrene type resin are shown in Table 1-2.

### <Rubber-modified styrene type resin - 12>

41.2 parts by weight of styrene, 12.8 parts by weight of butyl acrylate, 25.2 parts by weight of methyl methacrylate, 12 parts by weight of ethylbenzene, and 8.8 parts by weight of a styrene-butadiene diblock copolymer containing 30 % by weight of styrene (ASAPREN 680A; manufactured by Asahi Chemical Industry Co., Ltd.) are fed to a tank to dissolve. After the rubber elastomer is dissolved, 0.03 part by weight or organic peroxide PERHEXA C (manufactured by NOF Corporation) is fed to the tank, then the feed mixture is supplied to a reactor 1 at a feed speed of 2 ℓ/hr. The polymerization temperatures of reactors 1 to 3 are 116° C, 135° C and 150° C, respectively. The diameter of dispersed particles is controlled by adjusting the rotational speed of the agitators of the reactors 1 and 2. The properties of the rubber-modified styrene type resin are shown in Table 1-2.

### <Rubber-modified styrene type resin - 13>

A rubber-modified styrene type resin-13 is prepared according to the same method as used for preparing a rubber-modified styrene type resin-9 except for using a styrene-butadiene diblock copolymer containing 35 % by weight of styrene. The properties of the resulting resin are shown in Table 1-2.

### <Rubber-modified styrene type resin - 14>

A rubber-modified styrene type resin-14 is prepared according to the same method as used for preparing a rubber-modified styrene type resin-9 except that a styrene-butadiene diblock copolymer containing 45 % by weight of styrene is used, and the rotational speed of the agitator of reactors 1 and 2 is decreased to the lowest speed at which the reaction temperature can be regulated. The properties of the resulting resin are shown in Table 1-2.

### <Rubber-modified styrene type resin - 15>

A rubber-modified styrene type resin-15 is prepared according to the same method as used for preparing a rubber-modified styrene type resin-9 except that a styrene-butadiene-styrene triblock copolymer containing 30 % by weight of styrene is used, and the rotational speed of the agitator of reactors 1 and 2 is decreased to the lowest speed at which the reaction temperature can be regulated. The properties of the resulting resin are shown in Table 1-2.

### <Rubber-modified styrene type resin - 16>

A rubber-modified styrene type resin-16 is prepared according to the same method as used for preparing a rubber-modified styrene type resin-9 except that a styrene-butadiene diblock copolymer containing 20 % by weight of styrene is used, and the rotational speed of the agitator of reactors 1 and 2 is increased to the highest speed at which the reaction temperature can be regulated. The properties of the resulting resin are shown in Table 1-2.

### <Rubber-modified styrene type resin - 17>

A rubber-modified styrene type resin-17 is prepared according to the same method as used for preparing a rubber-modified styrene type resin-1 except that 41.5 parts by weight of styrene, 9.8 parts by weight of butyl acrylate, 30.0 parts by weight of methyl methacrylate, 12.3 parts by weight of ethylbenzene, and 6.3 parts by weight of a styrene-butadiene diblock copolymer (ASAPREN 680A; manufactured by Asahi Chemical Industry Co., Ltd.) are fed to a tank to dissolve. The properties of the resulting resin are shown in Table 1-2.

### <Rubber-modified styrene type resin- - 18>

A rubber-modified styrene type resin-18 is prepared according to the same method as used for preparing a rubber-modified styrene type resin-1 except that 39.6 parts by weight of styrene, 9.3 parts by weight of butyl acrylate, 28.5 parts by weight of methyl methacrylate, 11.7 parts by weight of ethylbenzene, and 10.9 parts by weight of a styrene-butadiene diblock copolymer (ASAPREN 680A; manufactured by Asahi Chemical Industry Co., Ltd.) are fed to a tank to dissolve. The properties of the resulting resin are shown in Table 1-2.

### <Example 1>

100 parts by weight of a rubber-modified styrene type resin-2 and 10 parts by weight of a partially hydrogenated terpene type resin (CLEARON M115; manufactured by Yasuhara Chemical Co., Ltd.) are mixed, and pelletized with a twin-screw extruder. Pellets obtained are fed to a single-screw (50 mmØ) extruder with a T-die to form a sheet having a thickness of 0.3 mm. The extruder temperature is 225° C, the T-die temperature is 230° C, the clearance of the T-die lip is 0.5 mm, both the clearances of a cooling roll and a touch roll are 0.3 mm, the linear pressure of the rolls is 5 kg/cm², and the temperature of all the three rolls (the above two rolls and another one) is 65° C. The take-off speed is controlled so as to form a sheet having a thickness of 0.3 mm. The properties of the resulting sheet are shown in Table 2.

A cup as shown in Fig. 2 is formed by a vacuum forming method by using the resulting sheet. The sheet is heated at 240° C (a heater is set at 240° C) for 5 sec. to be subjected to vacuum forming. The transparency of the resulting cup is shown in Table 2.

### <Examples 2 to 4>

Sheets and cups are formed according to the same method described as in Example 1 except that a rubber-modified styrene type resin-2 is replaced by rubber-modified styrene type resins-3, 4 and 5. The properties of the resulting sheets and the transparency of the cups formed are shown in Table 2.

### <Example 5>

A sheet and a cup are formed according to the same method described as in Example 1 except that a rubber-modified styrene type resin-9 is used. The properties of the resulting sheet and the transparency of the cup formed are shown in Table 2.

### <Examples 6 to 8>

Sheets and cups are formed according to the same method described as in Example 1 except that 100 parts by weight of a rubber-modified styrene type resin-2, and 3, 5 and 15 parts by weight of a partially hydrogenated terpene (CLEARON M115; manufactured by Yasuhara Chemical co., Ltd.), respectively, are mixed and pelletized with a twin-screw extruder. The properties of the resulting sheets and the transparency of the cups formed are shown in Table 2.

### <Example 9>

A sheet and a cup are formed according to the same method described as in Example 1 except that a partially hydrogenated terpene type resin CLEARON M115 is replaced by a terpene type resin YS resin TO-125 (manufactured by Yasuhara Chemical Co., Ltd.). The properties of the resulting sheet and the transparency of the cup formed are shown in Table 2.

### <Example 10>

A sheet and a cup are formed according to the same method described as in Example 1 except that the extruder temperature is 240° C, and the T-die temperature is 240° C. The properties of the resulting sheet and the transparency of the cup formed are shown in Table 2.

### <Example 11>

A sheet and a cup are formed according to the same method described as in Example 1 except that the extruder temperature is 220° C, the T-die temperature is 225° C, the clearance of the T-die lip is 0.4 mm, and the temperature of all three rolls is 50° C. The properties of the resulting sheet and the transparency of the cup formed are shown in Table 2.

### <Example 12>

A sheet and a cup are formed according to the same method described as in Example 10 except that a rubber-modified styrene type resin-1 is replaced by a rubber-modified styrene type resin-9. The properties of the resulting sheet and the transparency of the cup formed are shown in Table 2.

### <Example 13>

A sheet and a cup are formed according to the same method described as in Example 11 except that a rubber-modified styrene type resin-1 is replaced by a rubber-modified styrene type resin-9. The properties of the resulting sheet and the transparency of the cup formed are shown in Table 2.

### <Example 14>

A sheet and a cup are formed according to the same method described as in Example 1 except that the T-die temperature is 225° C, and the temperature of all three rolls is 60° C. The properties of the resulting sheet and the transparency of the cup formed are shown in Table 2.

### <Comparative Examples 1 to 5>

Sheets and cups are formed according to the same method described as in Example 1 except that rubber-modified styrene type resins-1, 6, 7, 8 and 10 are respectively used. The properties of the resulting sheets and the transparency of the cups formed are shown in Table 3.

### <Comparative Example 6>

A sheet and a cup are formed according to the same method described as in Example 1 except that a partially hydrogenated terpene resin CLEARON M115 (manufactured by Yasuhara Chemical Co., Ltd.) is not used. The properties of the resulting sheet and the transparency of the cup formed are shown in Table 3.

### <Comparative Example 7>

A sheet and a cup are formed according to the same method described as in Example 1 except that 2 parts by weight of a partially hydrogenated terpene type resin CLEARON M115 (manufactured by Yasuhara Chemical Co., Ltd.) is used. The properties of the resulting sheet and the transparency of the cup formed are shown in Table 3.

### <Comparative Example 8>

A sheet and a cup are formed according to the same method described as in Example 1 except that 10 parts by weight of hydrogenated terpene type resin CLEARON P115 (manufactured by Yasuhara Chemical Co., Ltd.) is used. The properties of the resulting sheet and the transparency of the cup formed are shown in Table 3.

### <Comparative Example 9>

A sheet and a cup are formed according to the same method described as in Example 1 except that the extruder temperature is 190° C, the T-die temperature is 200° C, and the temperature of all three rolls is 60° C. The properties of the resulting sheet and the transparency of the cup formed are shown in Table 3.

### <Comparative Example 10>

A sheet and a cup are formed according to the same method described as in Example 1 except that the temperature of all three rolls is 25° C. The properties of the resulting sheet and the transparency of the cup formed are shown in Table 3.

### <Comparative Example 11>

A sheet and a cup are formed according to the same method described as in Example 1 except that the clearance of the T-die lip is 1.5 mm, and the temperature of all three rolls is 60 °C. The properties of the resulting sheet and the transparency of the cup formed are shown in Table 3.

### <Comparative Example 12>

A sheet and a cup are formed according to the same method described as in Example 1 except that the clearance of the T-die lip is 1.0 mm, and the temperature of all three rolls is 60 ° C. The properties of the resulting sheet and the transparency of the cup formed are shown in Table 3.

### <Comparative Example 13>

A sheet and a cup are formed according to the same method described as in Example 1 except that the clearance of the T-die lip is 1.0 mm, and the temperature of all three rolls is 57 ° C. The properties of the resulting sheet and the transparency of the cup formed are shown in Table 3.

### <Comparative Example 14>

A sheet and a cup are formed according to the same method described as in Comparative Example 13 except that a rubber-modified styrene type resin-1 is replaced by a rubber-modified styrene type resin-9. The properties of the resulting sheet and the transparency of the cup formed are shown in Table 3.

### <Comparative Examples 15 and 16>

Sheets and cups are formed according to the same method described as in Example 1 except that a rubber-modified styrene type resin-2 is replaced by a rubber-modified styrene type resin-7, and 15 and 20 parts by weight of a partially hydrogenated terpene CLEARON M115 (manufactured by Yasuhara Chemical Co., Ltd.), respectively, are mixed. The properties of the resulting sheets and the transparency of the cups formed are shown in Table 3.

### <Comparative Example 17>

A sheet and a cup are formed according to the same method described as in Comparative Example 13 except that 20 parts by weight of a partially hydrogenated terpene type resin CLEARON M115 (manufactured by Yasuhara Chemical Co., Ltd.) is used. The properties of the resulting sheet and the transparency of the cup formed are shown in Table 3.

### <Comparative Example 18>

A sheet and a cup are formed according to the same method described as in Comparative Example 11 except that 20 parts by weight of a partially hydrogenated terpene type resin CLEARON M115 (manufactured by Yasuhara Chemical Co., Ltd.) is used. The properties of the resulting sheet and the transparency of the cup formed are shown in Table 3.

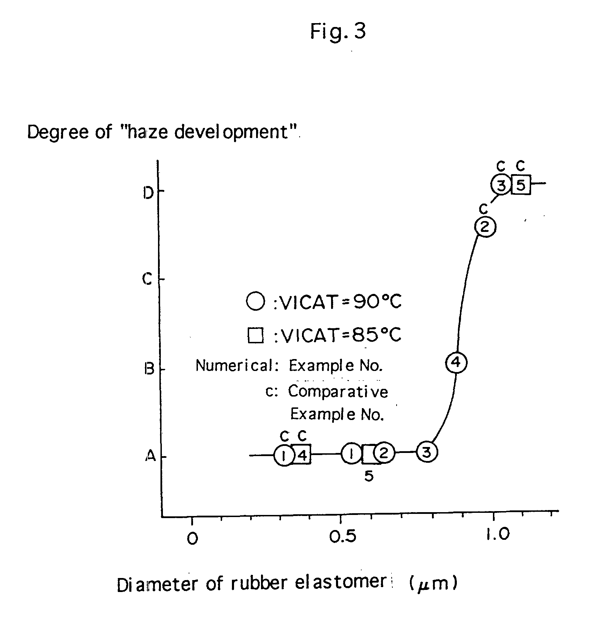

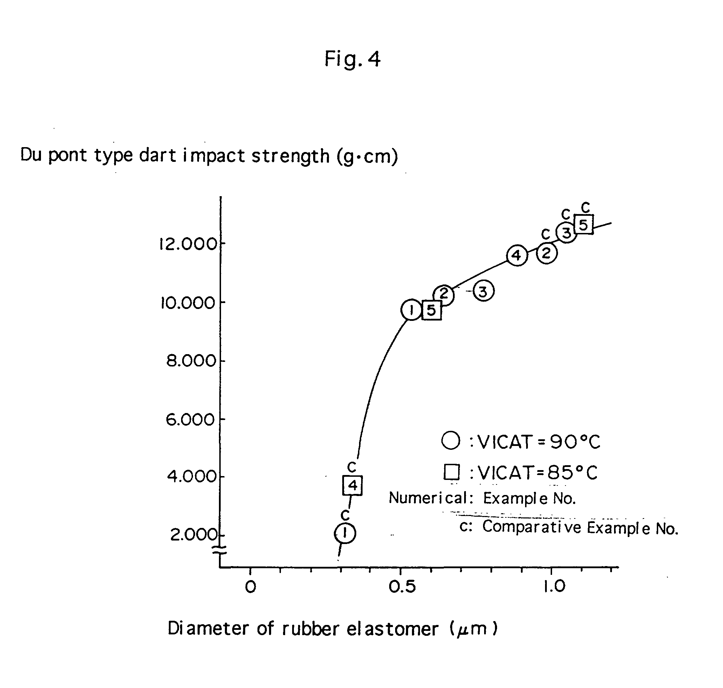

As regards the sheets and cups produced in Examples 1 to 5 and Comparative Examples 1 to 5, the relationship between the degree of "haze development" and Du Pont type dart impact strength, and the average diameter of dispersed particles of rubber elastomer are plotted, and shown in Figs. 3 and 4, respectively. When the average diameter of the rubber elastomer is less than 0.4 µm, the intensity is markedly low. When it is more than 0.9 µm, the degree of "haze development" is noticeable.

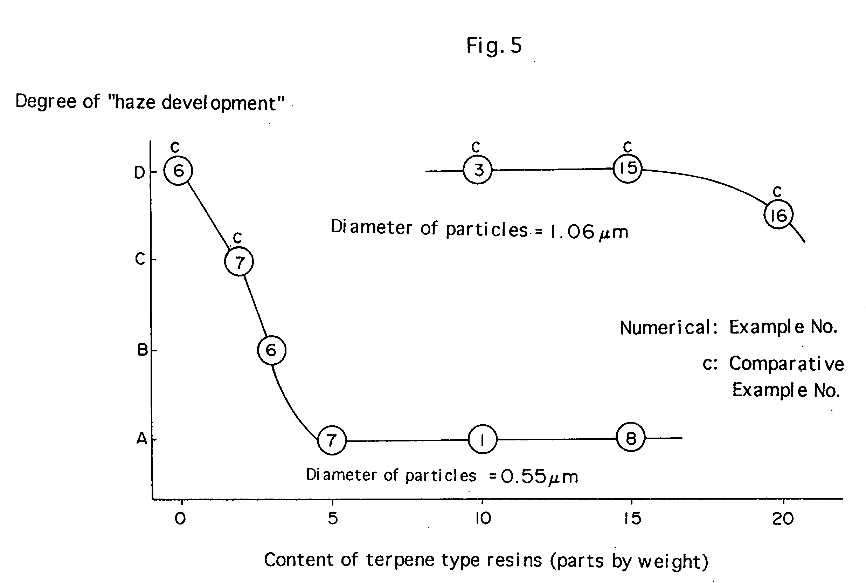

As regards the cups produced in Examples 1, 6 and 8, and Comparative Examples 3, 6, 7, 15 and 16, the relationship between the degree of "haze development" and the terpene type resins content is plotted, and shown in Fig. 5. When the terpene type resin content is less than 3 parts by weight, the degree of "haze development" is noticeable. When it is 20 parts by weight, "haze development" is not improved. When it is more than 15 parts by weight, stiffness (tensional modulus) is decreased.

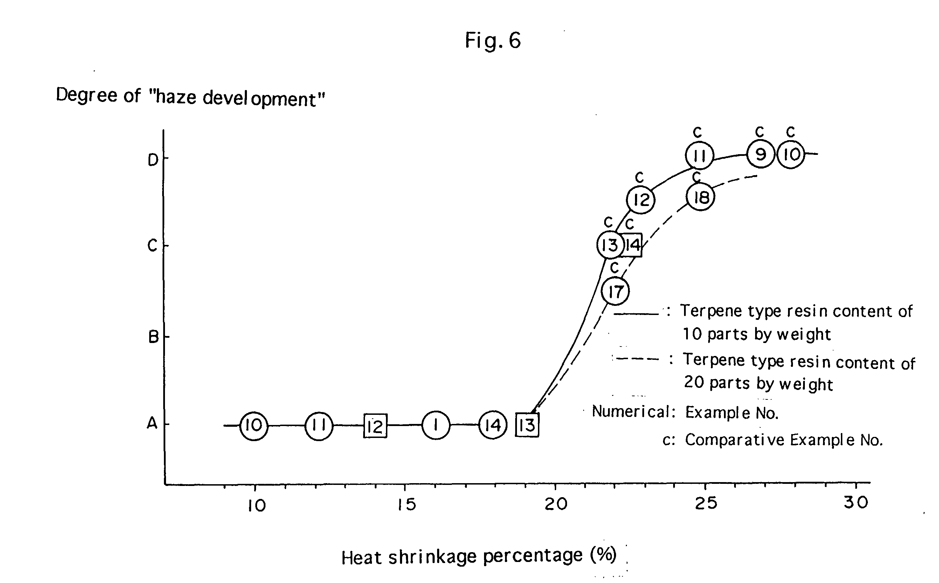

As regards the sheets and cups produced in Examples 1 and 10 to 14, and Comparative Examples 9 to 14, 17 and 18, the relationship between the heat shrinkage percentage of the sheet and degree of "haze development" is plotted, and shown in Fig. 6. When the heat shrinkage percentage is more than 20 %, the degree of "haze development" is high. When the heat shrinkage percentage is more than 20 %, "haze development" is not avoided by containing a large amount, e.g., 20 parts by weight, of partially hydrogenated terpene type resins.

The styrene type resin sheet of the present invention has an excellent balance of strength, transparency, and "haze development".

### <Examples 15 and 16>

Sheets and cups are formed according to the same method described as in Example 1 except that 100 parts by weight of a rubber-modified styrene type resin-17, and 3 and 5 parts by weight of a partially hydrogenated terpene type resin CLEARON M115 (manufactured by Yasuhara Chemical Co., Ltd.), respectively, are used. The properties of the resulting sheets and the transparency of the cups formed are shown in Table 4.

### <Examples 17 to 19>

Sheets and cups are formed according to the same method described as in Example 1 except that 100 parts by weight of a rubber-modified styrene type resin-18, and 5, 7.5 and 10 parts by weight of a partially hydrogenated terpene type resin CLEARON M115 (manufactured by Yasuhara Chemical Co., Ltd.), respectively, are used. The properties of the resulting sheets and the transparency of the cups formed are shown in Table 4.

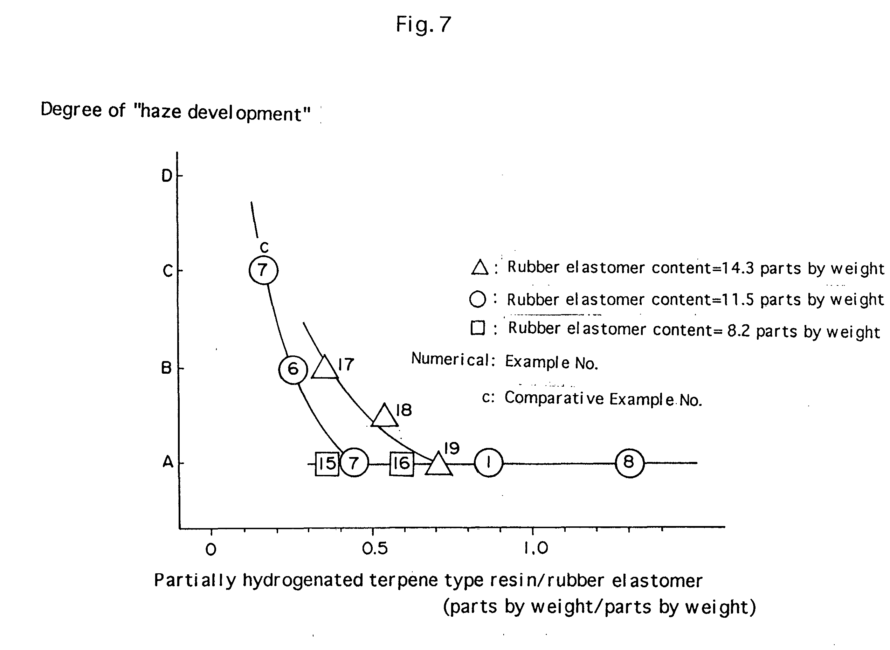

As regards the cups produced in Examples 1, 6 to 8 and 15 to 19 and Comparative Example 7, the relationship between the "haze development" and the content ratio of a partially hydrogenated terpene type resin to rubber elastomer is plotted and shown in Fig. 7. As the content ratio of a partially hydrogenated terpene type resin to rubber elastomer decreases, "haze development" tends to occur. When it is 0.25 or more, the degree of "haze development" is acceptable for practical use. When the content of rubber elastomer is high, such as when the content ratio is close to 1, the inhibition of "haze development" becomes more effective.

### <Example 20>

A sheet and a cup are formed according to the same method described as in Example 1 except that the clearance of the T-die lip is 1.0 mm, the clearance of cooling roll and touch roll is 0.5 mm, and the sheet thickness is 0.5 mm. The properties of the resulting sheet and the transparency of the cup formed are shown in Table 5.

### <Example 21>

A sheet and a cup are formed according to the same method described as in Example 1 except that the clearance of the T-die lip is 1.5 mm, the clearance of cooling roll and touch roll is 0.8 mm, and the sheet thickness is 0.8 mm. The properties of the resulting sheet and the transparency of the cup formed are shown in Table 5.

### <Comparative Example 19>

A sheet and a cup are formed according to the same method described as in Comparative Example 11 except that the clearance of the T-die lip is 1.0 mm, the clearance of cooling roll and touch roll is 0.5 mm, and the sheet thickness is 0.5 mm. The properties of the resulting sheet and the transparency of the cup formed are shown in Table 5.

### <Comparative Example 20>

A sheet and a cup are formed according to the same method described as in Comparative Example 11 except that the clearance of the T-die lip is 1.5 mm, the clearance of cooling roll and touch roll is 0.8 mm, and the sheet thickness is 0.8 mm. The properties of the resulting sheet and the transparency of the cup formed are shown in Table 5.

When the heat shrinkage percentage is more than 20 %, a sheet having a thickness of 0.5 mm or 0.8 mm shows a high degree of "haze development".

### <Example 22>

A sheet and a cup are formed according to the same method described as in Example 1 except that a rubber-modified styrene type resin-13 is used. The properties of the resulting sheet and the transparency of the cup formed are shown in Table 6.

### <Comparative Examples 21 to 23>

Sheets and cups are formed according to the same method described as in Example 1 except that rubber-modified styrene type resins-14, 15 and 16 are used. The properties of the sheets and the transparency of the cups are shown in Table 6.

When the styrene-butadiene diblock copolymer contains 25 to 40 % by weight of styrene, the average diameter of dispersed particles is easily controlled so that sheets and molded articles thereof have a good balance of transparency and strength. When the styrene content of the block copolymer is more than 40 % by weight, it is difficult to increase the average particle diameter. In that case, even though the average particle diameter is controlled to 0.48 µm, the strength is insufficient. When the styrene content is less than 25 % by weight, it is difficult to decrease the average particle diameter. As a result, even if the styrene content is controlled to 0.83 µm, the sheets produced do not have good transparency and show a high degree of "haze development" when secondarily processed by heating. When a styrene-butadiene triblock copolymer is used, the average particle diameter cannot be regulated so that an average particle diameter of 0.3 µm or more is not attained. For this reason, only sheets having considerably low strength are obtained.

### <Comparative Example 24>

A sheet and a cup are formed according to the same method described as in Example 1 except that a rubber-modified styrene type resin-11 is used. A cup is not completely formed under the forming conditions of the present invention, i.e., preset heating temperature of 240° C and a heating period of 24 sec. A cup is formed at 265° C as a result of raising the temperature every 5° C. When the preset temperature of the heater is 240° C, a cup is formed for 45 sec.

### <Comparative Example 25>

A sheet and a cup are formed according to the same method described as in Example 1 except that a rubber-modified styrene type resin-12 is used. When hot water of 90° C is poured into the cup produced, the cup is shrunk by about 3/4 in the direction of its height.

When the amount of C₂ to C₄-alkyl acrylic/methacrylic ester monomer unit (B) is less than 5 % by weight, the heat resistance is too high so that it is necessary to lengthen the heating period by 1.8 or to raise the preset temperature by about 30° C. As a result, the moldability, when the sheets are secondarily processed by heating, is insufficient. When the amount of (B) is more than 15 % by weight, the heat resistance is reduced. For this reason, the heat resistance of the resulting molded articles is decreased. This limits the use to which the molded articles can be put. When hot water of 90° C is poured into a cup produced in Example 1, no change is observed. The cup produced in Example 5 is slightly swelled at its sidewall, but there is no shrinkage in the direction of its height.

### INDUSTRIAL APPLICABILITY

Styrene type resin sheets of the present invention show excellent transparency, strength and stiffness, and show a high moldability when secondarily processed by heating. As a result, no "haze development" is observed. Accordingly, the molded articles formed from the sheets of the present invention show an excellent strength and transparency. Therefore, the sheets and molded articles of the present invention are suitable for packing material for foodstuffs and electric appliances and the like.

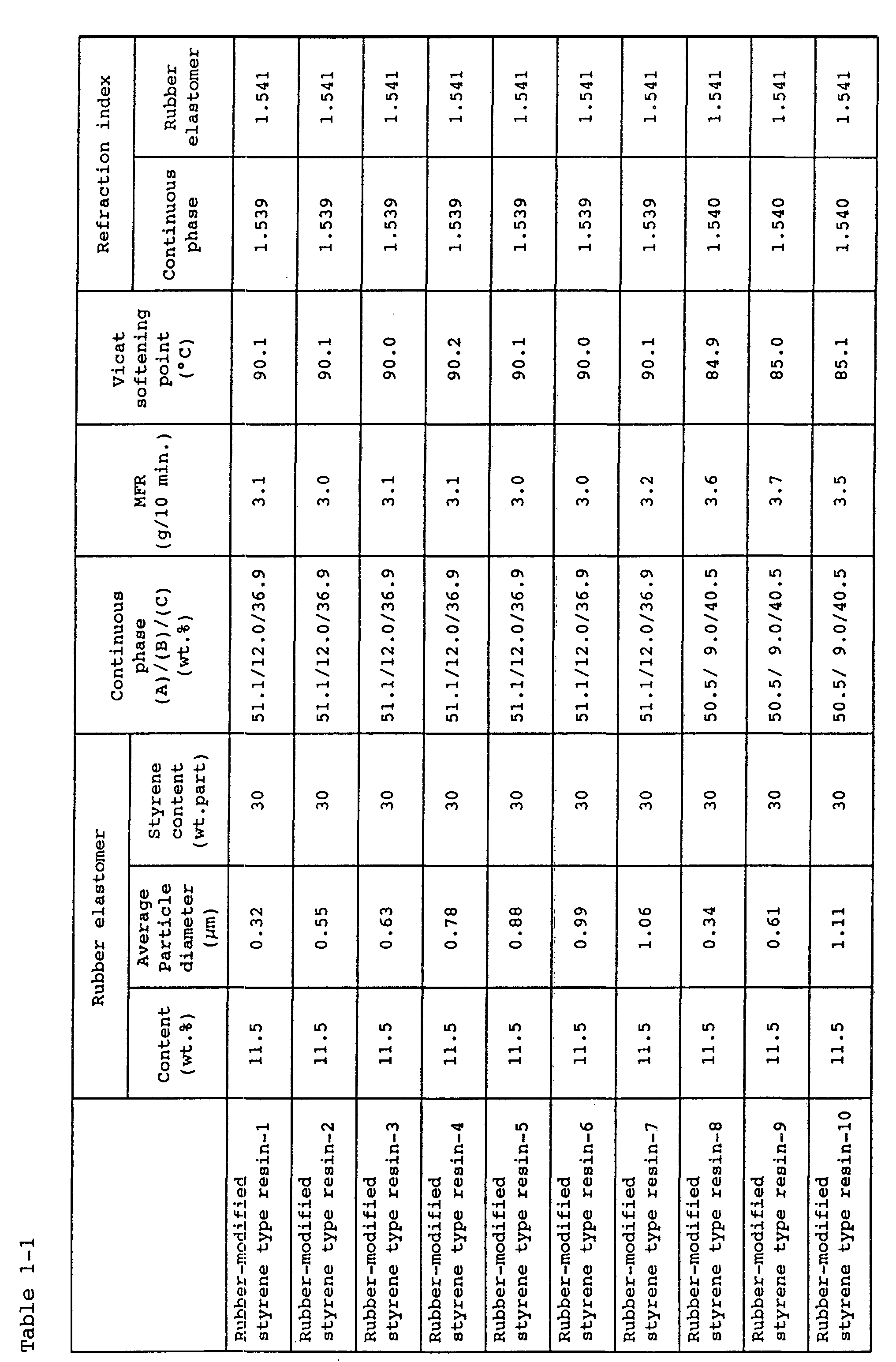

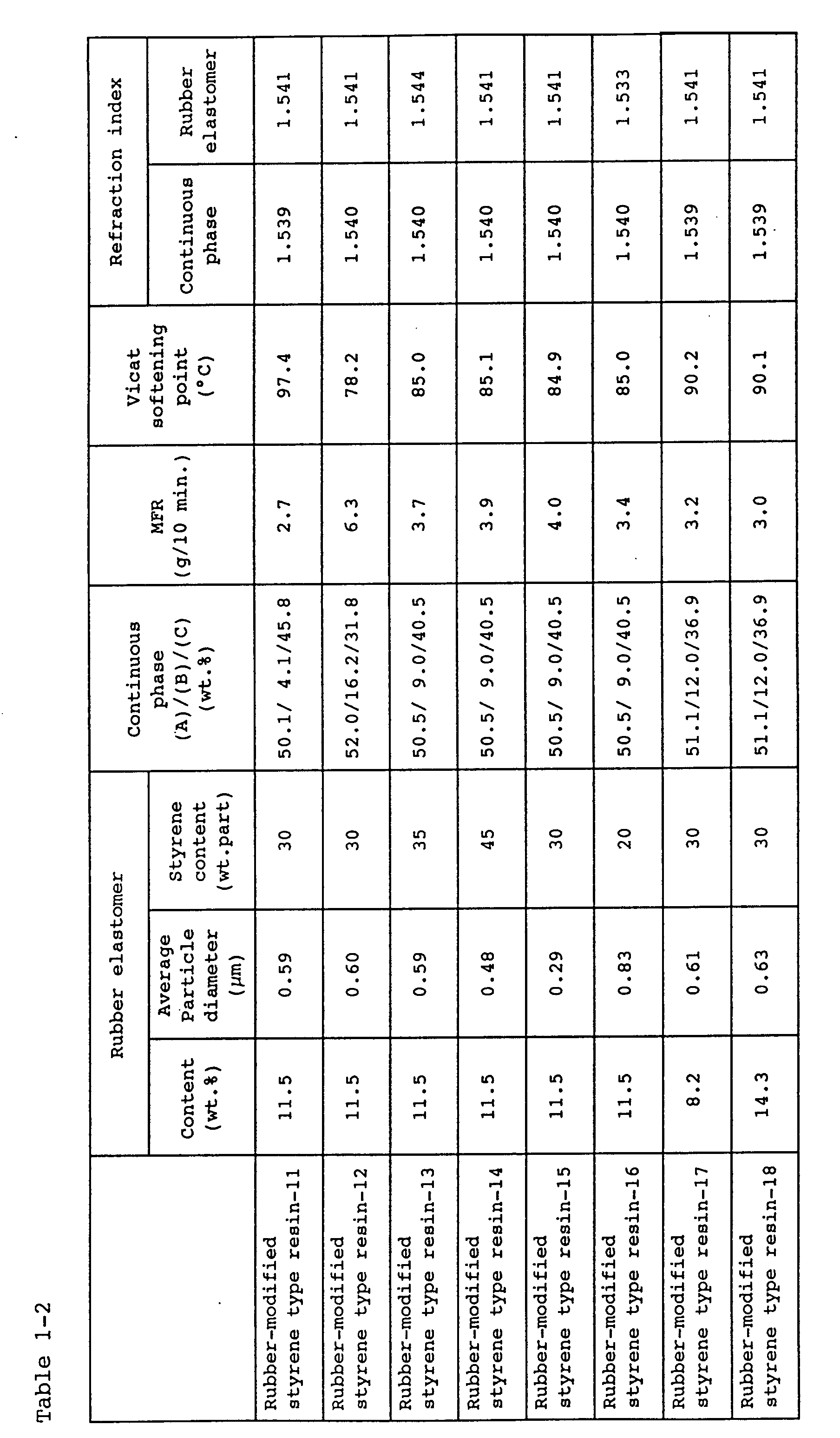

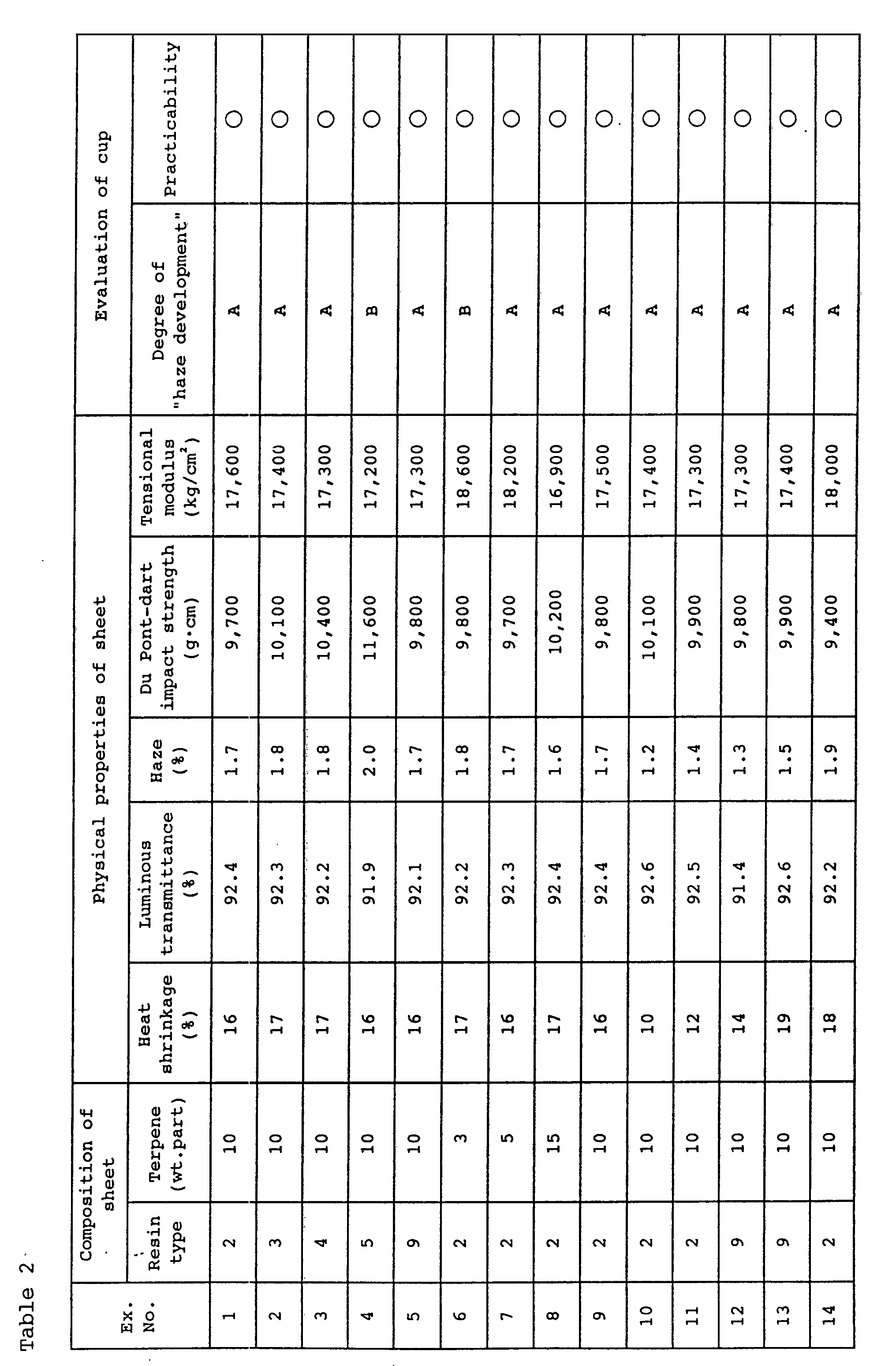

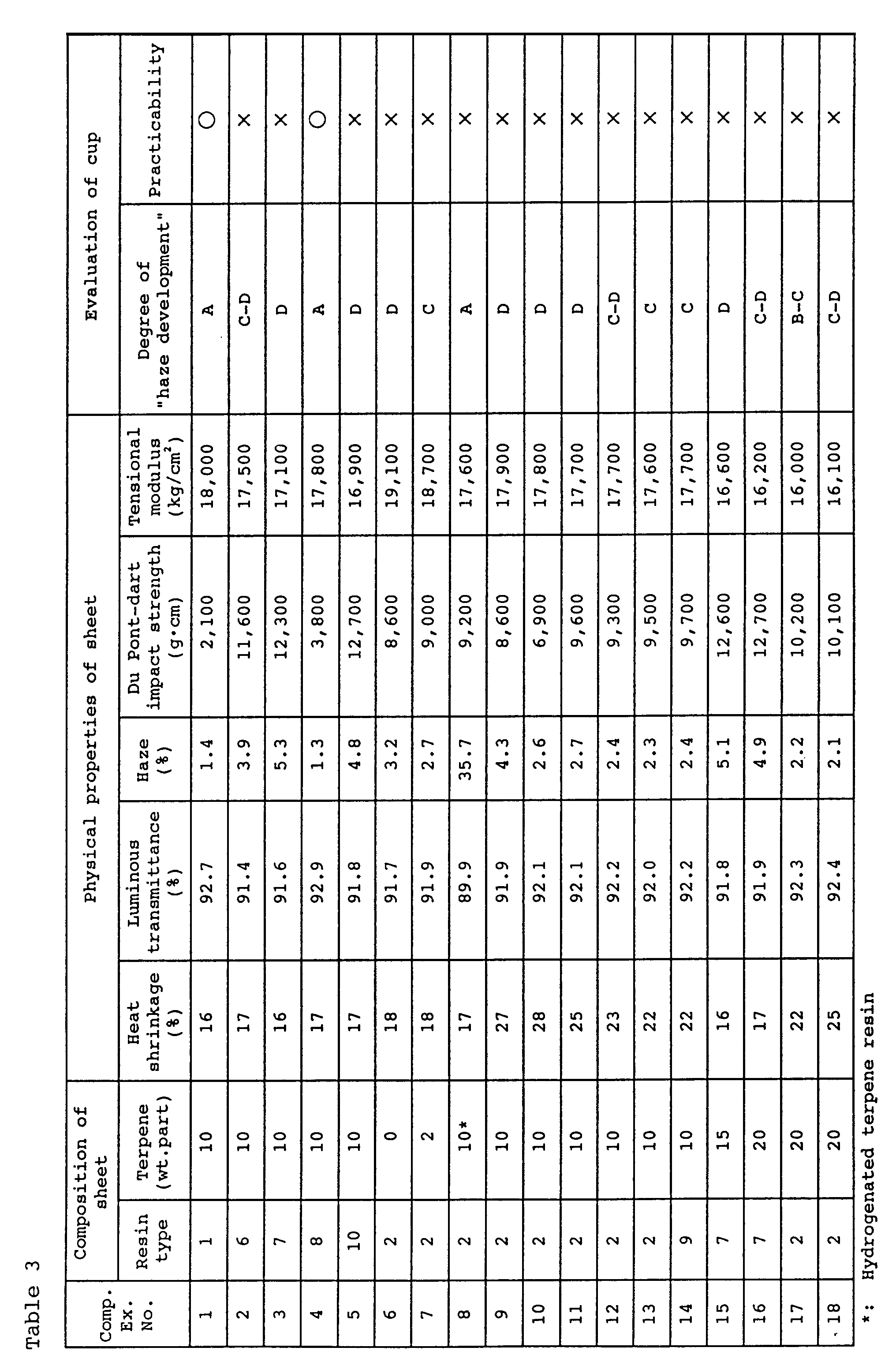

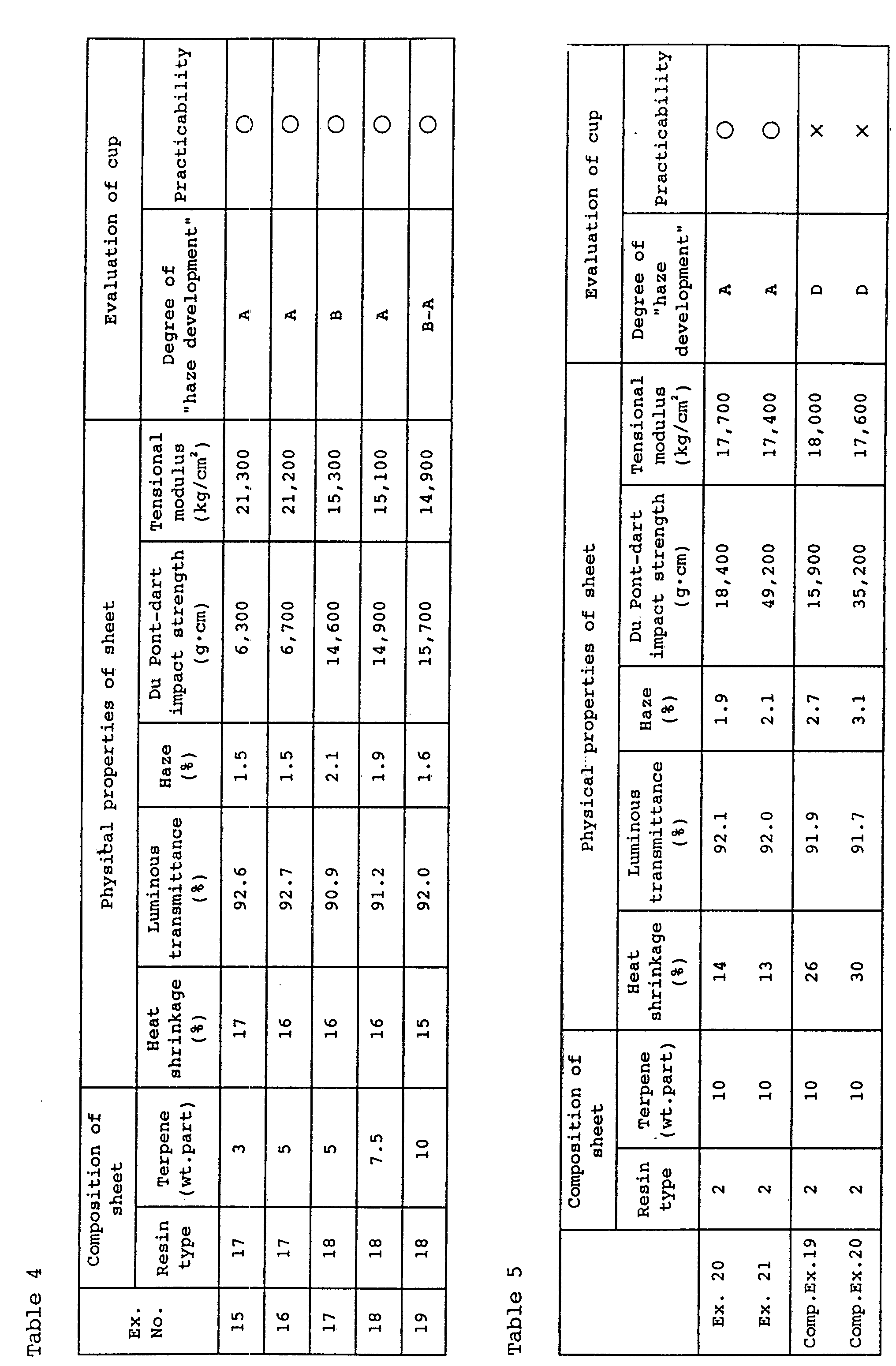

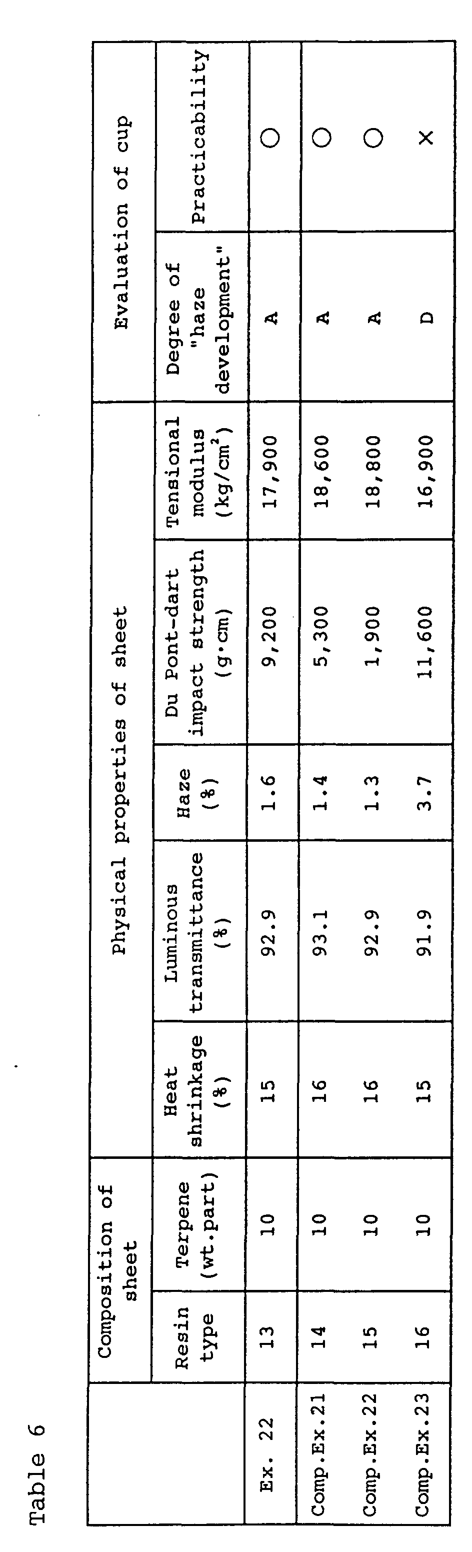

## Claims

1. A styrene type resin sheet which comprises a styrene type resin composition containing from 3 to 15 parts by weight of a terpene type resin and 100 parts by weight of a rubber-modified styrene type resin which contains (i) from 85 to 92 % by weight of a continuous phase of a copolymer comprising from 45 to 60 % by weight of a styrene type monomer unit, from 5 to 15 % by weight of a C₂ to C₄-alkyl acrylic ester monomer unit and/or a C₂ to C₄-alkyl methacrylic ester monomer unit, and from 25 to 50 % by weight of a methyl methacrylate monomer unit and (ii) from 8 to 15 % by weight of dispersed particles of rubber elastomer having an average diameter of from 0.4 to 0.9 µm and comprising a styrene-butadiene diblock copolymer having from 25 to 40 % by weight of styrene, which has a thickness of from 0.10 to 2.5 mm, and which has a heat shrinkage percentage of 20 % or less.

2. The styrene type resin sheet according to claim 1, wherein the content of the terpene type resin is from 0.25 to 1.0 times as much as that of the rubber elastomer.

3. The styrene type resin sheet according to claim 1, wherein the difference in the refractive index between the continuous phase and the rubber elastomer is 0.01 or less.

4. A styrene type resin molded article obtained by forming a styrene type resin sheet which comprises a styrene type resin composition containing from 3 to 15 parts by weight of a terpene type resin and 100 parts by weight of a rubber-modified styrene type resin which contains (i) from 85 to 92 % by weight of a continuous phase of a copolymer comprising from 45 to 60 % by weight of a styrene type monomer unit, from 5 to 15 % by weight of a C₂ to C₄-alkyl acrylic ester monomer unit and/or a C₂ to C₄-alkyl methacrylic ester monomer unit, and from 25 to 50 % by weight of a methyl methacrylate monomer unit and (ii) from 8 to 15 % by weight of dispersed particles of rubber elastomer having an average diameter of from 0.4 to 0.9 µm and comprising a styrene-butadiene diblock copolymer having from 25 to 40 % by weight of styrene, which has a thickness of from 0.10 to 2.5 mm, and which has a heat shrinkage percentage of 20 % or less.

## Patentansprüche

1. Styrolharz-Folie, die eine Styrolharzzusammensetzung enthält, welche 3 bis 15 Gewichtsteile eines Terpenharzes und 100 Gewichtsteile eines kautschukmodifizierten Styrolharzes umfasst, welches (i) 85 bis 92 Gew.-% einer kontinuierlichen Phase aus einem Copolymer, das 45 bis 60 Gew.-% Monomereinheiten des Styroltyps, 5 bis 15 Gew.-% Monomereinheiten eines Acrylssäure-C₂ bis C₄-alkylesters und/oder eines Methacrylsäure- C₂ bis C₄-alkylesters und 25 bis 50 Gew.-% Methylmethacrylat-Monomereinheiten enthält und (ii) 8 bis 15 Gew.-% dispergierte Teilchen eines Kautschukelastomers mit einem durchschnittlichen Durchmesser von 0,4 bis 0,9 µm enthält, das ein Styrol-Butadien-Diblock-copolymer mit 25 bis 40 Gew.-% Styrol umfasst, welche eine Dicke von 0,1 bis 2,5 mm hat und eine Wärmeschrumpfung von 20% oder weniger aufweist.

2. Folie aus Styrolharz nach Anspruch 1, wobei der Gehalt an Terpenharz 0,25 bis 1,0 mal so groß wie der des Kautschukelastomeren ist.

3. Folie aus Styrolharz nach Anspruch 1, wobei der Unterschied im Brechungsindex zwischen der kontinuierlichen Phase und dem Kautschukelastomeren 0,01 oder weniger beträgt.

4. Formkörper aus Styrolharz, erhalten durch Verformen einer Folie aus Styrolharz, die eine Styrolharzzusammensetzung enthält, welche 3 bis 15 Gewichtsteile eines Terpenharzes und 100 Gewichtsteile eines kautschukmodifizierten Styrolharzes umfasst, welches (i) 85 bis 92 Gew.-% einer kontinuierlichen Phase aus einem Copolymer, das 45 bis 60 Gew.-% Monomereinheiten des Styroltyps, 5 bis 15 Gew.-% Monomereinheiten eines Acrylssäure-C₂ bis C₄-alkylesters und/oder eines Methacrylsäure-C₂ bis C₄-alkylesters und 25 bis 50 Gew.-% Methylmethacrylat-Monomereinheiten enthält und (ii) 8 bis 15 Gew.-% dispergierte Teilchen eines Kautschukelastomers mit einem durchschnittlichen Durchmesser von 0,4 bis 0,9 µm umfasst, welches ein Styrol-Butadien-Diblock-copolymer mit 25 bis 40 Gew.-% Styrol umfasst, welche eine Dicke von 0,1 bis 2,5 mm hat und eine Wärmeschrumpfung von 20% oder weniger aufweist.

## Revendications

1. Feuille en résine du type styrénique, qui comprend une composition de résine de type styrénique contenant de 3 à 15 parties en poids d'une résine de type terpénique et 100 parties en poids d'une résine de type styrénique modifiée au caoutchouc qui contient (i) de 85 à 92% en poids d'une phase continue d'un copolymère comprenant de 45 à 60% en poids d'un motif de monomère de type styrénique, de 5 à 15% en poids d'un motif de monomère d'acrylate d'alcoyle ayant de deux à quatre atomes de carbone dans la partie alcoyle et/ou d'un motif de monomère de méthacrylate d'alcoyle ayant de deux à quatre atomes de carbone dans la partie alcoyle et de 25 à 50% en poids d'un motif de monomère de méthacrylate de méthyle et (ii) de 8 à 15% en poids de particules dispersés d'élastomère de caoutchouc ayant un diamètre moyen de 0,4 à 0,9 µm et comprenant un copolymère disséquencé styrène-butadiène ayant de 25 à 40% en poids de styrène, qui a une épaisseur de 0,10 à 2,5 mm et qui a un pourcentage de retrait sous l'action de la chaleur de 20% ou de moins de 20%.

2. Feuille en résine de type styrénique suivant la revendication 1, dans laquelle la teneur en la résine du type terpénique représente de 0,25 à 1,0 fois celle de l'élastomère de caoutchouc.

3. Feuille en résine de type styrénique suivant la revendication 1, dans laquelle la différence d'indice de réfraction entre la phase continue et l'élastomère de caoutchouc est de 0,01 ou inférieure de 0,01.

4. Objet moulé en résine de type styrénique, obtenu en formant une feuille en résine de type styrénique qui comprend une composition de résine de type styrénique contenant de 3 à 15 parties en poids d'une résine de type terpénique et 100 parties en poids d'une résine de type styrénique modifiée au caoutchouc qui contient (i) de 85 à 92% en poids d'une phase continue d'un copolymère comprenant de 45 à 60% en poids d'un motif de monomère de type styrénique, de 5 à 15% en poids d'un motif de monomère d'acrylate d'alcoyle ayant de deux à quatre atomes de carbone dans la partie alcoyle et/ou d'un motif de monomère de méthacrylate d'alcoyle ayant de deux à quatre atomes de carbone dans la partie alcoyle et de 25 à 50% en poids d'un motif de monomère de méthacrylate de méthyle et (ii) de 8 à 15% en poids de particules dispersés d'élastomère de caoutchouc ayant un diamètre moyen de 0,4 à 0,9 µm et comprenant un copolymère disséquencé styrène-butadiène ayant de 25 à 40% en poids de styrène, qui a une épaisseur de 0,10 à 2,5 mm et qui a un pourcentage de retrait sous l'action de la chaleur de 20% ou de moins de 20%.
